# EUROPÄISCHE PATENTSCHRIFT

(11) **EP 1 594 025 B1**
(45) Veröffentlichungstag und Bekanntmachung des Hinweises auf die Patenterteilung: **27.11.2019**
(21) Anmeldenummer: 05009774.0
(22) Anmeldetag: 04.05.2005
(51) Int. Cl.: F04D 27/00, F24H 7/04, F24H 9/20

(54) **Verfahren und Heizgerät zur Regelung einer Temperatur**
Method and heating device for controlling a temperature
Procédé et appareil de chauffage pour réguler une température

(30) Priorität: 06.05.2004 DE 102004022875
(43) Veröffentlichungstag der Anmeldung: 09.11.2005
(73) Patentinhaber: Stiebel Eltron GmbH & Co. KG, 37603 Holzminden (DE)
(72) Erfinder: Bräcker, Ernst-Emil, 37671 Höxter (DE); Karpp, Berhard, 57470 Hombourg-Haut (FR); Eiler, Walter, Dr., 37671 Höxter (DE)

(56) Entgegenhaltungen:
- DE-A1- 2 530 824
- FR-A1- 2 363 957
- GB-A- 2 153 554
- GB-A- 2 236 877

## Beschreibung

Die Erfindung betrifft ein Verfahren und ein Heizgerät zur Regelung einer Temperatur, bei dem die Wärmeabgabe eines Heizgerätes an einen Raum abhängig von mindestens einer Solltemperatur gesteuert oder geregelt ist, wobei die Temperatur mit einem Temperaturfühler gemessen und einer Steuer- oder Regeleinrichtung zugeführt ist, und die Temperatur oder eine korrigierte Isttemperatur mit der Solltemperatur verglichen und abhängig von der Abweichung der Solltemperatur eine Sollwärmeabgabe bestimmt wird.

Ein Speicherheizgerät ist aus der FR 2 363 987 A1 bekannt. Dieses weist drei Steuer- und Regeleinrichtungen auf, wobei die erste Einrichtung wechselnde Heizwiderstandslasten verhindert, die zweite das Wechseln auf die Lüfterentladung verhindert und die dritte Einrichtung einen Temperaturabfall verursacht. Die erste Einrichtung kann während der Stoßzeiten von 7 bis 9 Uhr morgens und von 17 bis 19 Uhr platziert sein. Die zweite Einrichtung kann Kontakte zu sensitiven Öffnungen des Raumes haben. Schließlich kann die dritte Einrichtung so eingerichtet werden, dass die Soll-Temperatur während der Nacht oder dann, wenn die Räumlichkeiten nicht genutzt werden, gesenkt wird.

In der GB 2 153 554 A ist ein Verfahren zur Regelung der Temperatur in einem großen Gebäude bekannt, bei dem eine thermische Anlage gemäß einem Zeit- und Temperaturbedarfsprogramm und in Übereinstimmung mit meteorologischen Daten derart gesteuert wird, dass sie dazu neigt, voraussichtliche Umgebungsbedingen zum Erreichen der geforderten Zeit zu kompensieren und so die Energiezufuhr zu der thermischen Anlage zu minimieren. Die Zeiten, in denen die Zentralheizung ein- und ausgeschaltet wird, können in Abhängigkeit von der Prognose bestimmt werden. Verschiedene Zonen im Gebäude (oder in separaten Gebäuden) können einzeln von einem gemeinsamen Computer gesteuert werden.

In der GB 2 236 877 A ist eine PTC-Heizvorrichtung mit positivem Wärmekoeffizienten zur Verwendung in Haushaltsanwendungen bekannt. Die Heizvorrichtung kann eine gewünschte Raumtemperatur beibehalten, indem die Geschwindigkeit der Luft durch das elektronisch gesteuerte PTC-Element mit variablem Lüfterantrieb geregelt wird. Nähert sich die Raumtemperatur der gewünschten Temperatur, verlangsamt sich der Lüfter auf eine Geschwindigkeit, die ausreicht, um die Raumtemperatur aufrechtzuerhalten. Bei der gewünschten Temperatur bewegt sich das Gebläse sehr langsam und jeder weitere Temperaturanstieg bewirkt, dass das Heizelement abgeschaltet wird, um sicherzustellen, dass keine Wärme erzeugt wird, wodurch Energie eingespart und der Anstieg der Temperatur im Raum begrenzt wird. Die Lüftergeschwindigkeit wird gesteuert durch Variieren des Zündwinkels eines Triac-Schalters, bezogen auf die Nulldurchgangspunkte des Lüfterstroms. Der Lüfter und die Heizung können durch eine Uhr gesteuert werden, um ein- und auszuschalten oder um die Raumtemperatur während des Tages zu ändern.

Aus der DE 2 530 824 A1 ist ein elektrisches Speicherheizgerät bekannt, das einen zur Wärmeabgabe einschaltbaren Lüfter aufweist. Als Steuerglied für den Lüftermotor dient ein Raumthermostat, das ein der Abweichung der Raumtemperatur von der eingestellten Solltemperatur analoges Gleichspannungssignal abgibt. In dem Speicherheizgerät ist eine elektronische Regeleinrichtung angeordnet, welche einen Differenzverstärker aufweist, an dessen einem Eingang das Gleichspanungssignal des Raumthermostaten und an dessen anderem Eingang ein Sägezahnsignal liegt und dass das impulsartige Ausgangssignal des Differenzverstärkers ein dem Lüftermotor vorgeschaltetes Schaltelement schaltet.

Im Folgenden ist als ein Anwendungsbeispiel ein Wärmespeicherheizgerät mit einem Entladeregler beschrieben.

Ein selbstlernendes Regelverfahren ist aus der DE 198 04 565 C2 bekannt, bei dem zur Regelung einer Temperiereinrichtung zum Zu- oder Abführen von Wärme ein maximaler und ein minimaler Temperatur-Sollwert vorgegeben wird. Die Isttemperatur eines Raumes wird regelmäßig gemessen, wobei Ein- und Ausschaltzeitpunkte festgelegt werden und lokale Minima und Maxima des Temperaturverlaufs bestimmt werden. Weiterhin wird die erste Ableitung des Temperaturverlaufs gebildet, um die Ein- und Ausschaltzeitpunkte zu optimieren. Entsprechend einem Regelalgorithmus werden die Ein- und Ausschaltzeitpunkte sowie die Bildung der ersten Ableitung immer wieder neu gestartet.

Eine Heizlüfter-Einheit mit Laststeuerung ist aus der DE 100 54 615 A1 bekannt, wobei das Heizgerät aus zwei Heizeinrichtungen besteht. Die erste Heizeinrichtung ist unterbrochen eingeschaltet und eine zweite Heizeinrichtung wird wahlweise aktiviert. Die Austrittstemperatur des erwärmten Mediums aus der Heizlüftereinheit wird aufrechterhalten, indem das Taktverhältnis der zweiten Heizeinrichtung gesteuert wird. Ein Verfahren zum Minimieren von Lastschwankungen beim Betrieb eines elektrischen Gerätes hoher Leistungsaufnahme wird ebenfalls bereitgestellt. Bei einem Verfahren zur Steuerung des Ladens und Entladens von elektrischen Speicherheizgeräten wird der Lüfter bzw. die Turbine abhängig von der Raumtemperatur und von vorgegebenen Schwellwerten betrieben. Die Drehzahl der Turbine wird entsprechend verschiedener Phasen moduliert. Zunächst wird die Nenndrehzahl während einer vorgegebenen Dauer eingestellt, während in den folgenden Perioden die Drehzahl auf unterschiedlichen Niveaus erfolgt, die abhängig von der Temperatur des Raumes sind, und der Temperaturgradient im Raum einem vorgegebenen Wert entspricht. Die Reduzierung der Drehzahl erfolgt in Abhängigkeit von vorgegebenen Schwellwerten, die mit der Raumtemperatur verglichen werden.

Ein Wärmespeicherheizgerät und ein Verfahren zur Regelung der Raumtemperatur ist weiterhin aus der DE 36 31 525 C2 bekannt. Ein im Wärmespeicher vorhandenes Gebläse wird von einer Raumtemperaturregelung angesteuert. Die Raumtemperaturregelung wiederum ist mit einem ersten Temperaturfühler verbunden, der an einer von einem Speicherkern des Wärmespeichers entfernt gelegenen Stelle im Innenraum des Gehäuses, jedoch außerhalb des Gebläseluftstroms angeordnet ist. Dieser erste Temperaturfühler ist von der Speicherkerntemperatur des Wärmespeicherheizgerätes beeinflußt, so dass mit einem zweiten Temperaturfühler die Speicherkerntemperatur gemessen wird und mit dieser die mit dem ersten Temperaturfühler gemessene Temperatur korrigiert wird. Mit der korrigierten Temperatur wird dann die Drehzahl des Gebläses bzw. die Wärmeabgabe des Wärmespeicherheizgerätes gesteuert.

Allgemein bekannt sind Proportionalregler, mit denen abhängig vom Vergleich eines Temperatur-Sollwertes mit einem Temperatur-Istwert die Wärmeabgabe von Heizgeräten bestimmt wird. Die Gebläse weisen in der Regel eine Minimal-, Maximal- und Anlaufdrehzahl auf. Durch die Minimaldrehzahl ist ein Mindestwert einer Wärmeabgabe, insbesondere bei Wärmespeicherheizgeräten vorgegeben.

Bei Wärmespeicherheizgeräten erfolgt die Wärmeabgabe an den Raum über Strahlung von der Geräteoberfläche aus, über natürliche Konvektion und die über ein Gebläse erzwungene Konvektion. Bezogen auf die Wärmelieferung sind die Strahlung und die natürliche Konvektion des Gerätes nur bedingt regelbar. Zur Raumtemperaturregelung wird der regelbare Anteil der Wärmeabgabe durch Ansteuerung der Zwangskonvektion mittels Lüfter genutzt. Diese wiederum ist eingeschränkt durch die minimale und maximale Drehzahl des Lüfters. Mit Einschalten des Lüfters wird also zusätzlich zur Strahlung und natürlichen Konvektion eine Mindestwärmeabgabe erreicht. Liegt die Summe der Wärmeabgabe aus Strahlungsanteil, natürlichem Konvektionsanteil und der durch das Gebläse gelieferten Mindestwärmemenge in Summe über dem Wärmebedarf, ist ein Takten des Lüfters erforderlich. Dies führt zu einem intervallartigen Ausschieben von Wärme in den Raum. Je nach Größe und physikalischer Beschaffenheit des Raumes wird durch das intervallartige Zuführen von Wärme eine Temperaturschwingung bzw. -schwankung im Raum erzeugt.

Aufgabe der Erfindung ist es, die Raumtemperaturschwankungen, die durch die Wärmeabgabe des Heizgerätes erzeugt werden, zu unterbinden und zu minimieren.

Die Aufgabe wird durch das Verfahren gemäß Anspruch 1 gelöst. Vorteilhafte Ausführungsformen der Erfindung sind in den Unteransprüchen angegeben.

Um die Wärmeabgabe eines Heizgeräts an einen Raum zu beeinflussen, ist ein Temperaturfühler mit einer Steuer- oder Regelvorrichtung des Heizgerätes verbunden, in der eine Sollwärmeabgabe berechnet wird. Die Wärmeabgabe erfolgt dabei mittels einer Solldrehzahl eines Lüfters, einer Öffnungsstellung einer Öffnungsklappe und/oder mit der Sollheizleistung eines Heizkörpers vom Heizgerät.

Vorteilhaft ist, dass die Sollwärmeabgabe zusätzlich von einem Taktsignal überlagert oder modifiziert ist, wodurch die Intensität der Wärmeabgabe von der Sollwärmeabgabe mindestens teilweise abweicht,
wobei die von der Steuer- und Regeleinrichtung vorgegebenen Ein- und Ausschaltzeiten und auch die vorgegebenen Drehzahlwerte an den Lüfter vorzugsweise von Aktiv- und Ruhezeiten überlagert sind,
wobei eine Drehzahl des Lüfters, wenigstens in Ruhezeiten (R) von der Solldrehzahl, der berechneten Sollwärmeabgabe (Qs) abweicht,
wobei in Aktivzeiten (A) die Wärmeabgabe (Qw) des Heizgerätes durch Erhöhung der Drehzahl, erhöht ist und/oder dass in den Ruhezeiten (R) die Wärmeabgabe des Heizgerätes durch Verminderung der Drehzahl, vermindert ist,
und zu Beginn der Aktivzeiten (A) am Lüfter mindestens bis zum Anlauf des Lüfters oder für eine vorgegebene Zeit die volle Netzspannung oder Bemessungsspannung des Lüfters anliegt und nach Anlauf des Lüfters oder nach einer vorgegebenen Zeit die Drehzahl des Lüfters geregelt ist.

Eine vorteilhafte Lösung ist es, die Sollwärmeabgabe mit einem Taktgenerator (Ein-Aus-Signal) zu überlagern oder die Sollwärmeabgabe zu modifizieren. Über einen Zeitraum wird die Sollwärmeabgabe so moduliert, dass sie periodisch vergrößert und/oder verkleinert wird. Dies erfolgt in vorteilhafter Weise durch den Mikroprozessor, der eine Plus-Minus-Abweichung der Wärmeabgabe in einer Bandbreite ausgehend von der Sollwärmeabgabe so berechnet, dass die Summe der Abweichungen gegen Null tendiert. Die Bandbreite ist entweder fest vorgegeben oder in Abhängigkeit der Abweichung der Temperatur von der Solltemperatur bestimmt. Begrenzt ist die Schwankung der Sollwärmeabgabe durch die maximale Drehzahl des Lüfters und kann von Null bis zum Maximum entsprechend der maximalen Drehzahl schwanken.

In den Aktivzeiten läuft der Lüfter mindestens mit seiner von der Steuer- und Regeleinrichtung zur Erreichung der vorgegebenen Solltemperatur erforderlichen Drehzahl. In den Ruhezeiten wird die Drehzahl des Lüfters abgesenkt, wodurch die Wärmeabgabe vermindert ist. Ist die Drehzahl des Lüfters in der Aktivzeit die Minimaldrehzahl, so folgt daraus, dass der Lüfter in den Ruhezeiten abgeschaltet ist. Liegt die Drehzahl des Lüfters in den Aktivzeiten zwischen der Minimal- und der Bemessungsdrehzahl, reicht es aus, in den Ruhezeiten eine Verminderung der Drehzahl in den Grenzen seiner Betriebsfähigkeit durchzuführen oder den Lüfter abzuschalten. In den Ruhezeiten (R) kann alternativ eine Öffnungsklappe geschlossen sein und/oder die Leistungszufuhr zum Heizkörper oder Zusatzheizkörper abgeschaltet werden.

Wird die Raumtemperatur erreicht, erfolgt eine vollständige Abschaltung des Lüfters. Erst nach Unterschreiten der Solltemperatur des Raumes erzeugt die Steuer- und Regeleinrichtung wieder einen Proportionalwert für die Drehzahl des Lüfters. In vorteilhafter Weise wird dieser dann für eine vorgegebene Zeitdauer mindestens mit seiner Anlaufspannung oder Bemessungsspannung betrieben. Nach Anlaufen des Lüfters wird dieser mit einem der Steuer- und Regeleinrichtung vorgegebenen Ansteuersignal, was einer Drehzahl entspricht, betrieben. Diesem Ansteuersignal überlagern sich dann wieder Ruhezeiten, in denen der Lüfter schon vor Erreichen der Solltemperatur abgeschaltet ist oder mit verminderter Drehzahl läuft.

Das Verhältnis der Aktiv- und Ruhezeiten kann von einem Taktgenerator erzeugt sein oder aber auch in Abhängigkeit von der Abweichung der Raumtemperatur von der Solltemperatur oder anderen Parametern im Mikroprozessor generiert sein. Ist die Abweichung der Temperatur von der Solltemperatur sehr groß, so ist es vorteilhaft, die Ruhezeiten kürzer als die Aktivzeiten zu gestalten, wobei es sich als vorteilhaft erwiesen hat, den Lüfter in den Ruhezeiten für mindestens 20 sek ruhen zu lassen. Weiter ist es von Vorteil, die Wärmeabgabe oder einen der Wärmeabgabe äquivalenten Wert mit der Steuer- und Regeleinrichtung zu ermitteln, wobei die Summe der Wärmeabgabe während der Aktiv- und Ruhezeiten der Summe der Sollwärmeabgabe entsprechen soll.

Ein Temperaturfühler zur Messung der Temperatur ist am Wärmespeicherheizgerät oder im Raum angeordnet. Je nach Position des Temperaturfühlers wird dieser mehr oder weniger stark vom Luftstrom des Lüfters und der Wärmestrahlung des Gerätes beeinflußt. Ist der Temperaturfühler im Gerät eingebaut, wird dieser auch von der Speicherkerntemperatur über Wärmeleitung beeinflußt.

Stehen die Lüfter still, erfolgt durch Wärmeleitung und Strahlung vom Speicherkern aus eine Erwärmung des Temperaturfühlers über die Raumtemperatur hinaus. Mit Anlaufen des Lüfters erfolgt durch den Ansaugluftstrom bedingt eine Umspülung des Temperaturfühlers mit Raumluft entsprechend der Raumtemperatur. Wenn der Temperaturfühler im Bodenbereich angeordnet ist, wird eher kühlere Luft aus den unteren Temperaturschichten im Raum angesaugt, die unterhalb der in Raummitte gemessenen Raumtemperatur liegen. Der Einfluß der Strahlung und Wärmeleitung durch den Speicherkern ist dann in gewissem Umfang erwünscht, um die im Bodenbereich gemessene niedrige Raumtemperatur anzuheben. Steht nun der Wärmespeicher sehr lange ohne Laufen des Lüfters still, so wird der Einfluß des Kerns durch Wärmeleitung und Strahlung immer stärker, und dem Raumtemperaturfühler wird fälschlicherweise eine zu hohe Raumtemperatur vorgegaukelt.

Laufen die Lüfter zu lange, wird der Raumtemperaturfühler von der am Boden befindlichen kühlen Raumluft unter die eigentliche Raumtemperatur in Raummitte abgekühlt. Als Meßpunkt ist jedoch die Raumtemperatur etwa im Zentrum des Raumes auch für normgerechte Messungen relevant. Der Temperaturfühler soll eine Temperatur messen, die der in der Mitte des Raumes entspricht. Durch die der eigentlichen Sollwärmeabgabe überlagerten Ein-Aus-Taktung oder zumindest Abweichung der Lüfterdrehzahl in einer Bandbreite ist vermieden, dass der Lüfter zu lange läuft oder zu lange steht. Stillstandszeiten von ca. 1 min haben sich als besonders vorteilhaft erwiesen, um in diesem Zeitraum bei Stillstand des Lüfters die zu starke Abkühlung durch die am Boden befindliche Luft durch Wärmeleitung vom Gehäuse aus zu kompensieren. Ebenso verhält es sich mit der Einschaltzeit des Lüfters, die in vorteilhafter Weise zwischen 0,5 und 3 min liegen sollte.

Die Aktiv- und Ruhezeiten sind in Abhängigkeit der Physik des Gerätes anzupassen. Als eine Mindestruhezeit sind beispielsweise ca. 20 sek vorgesehen. Dieser Wert kann je nach Lüftereigenschaften noch nach oben oder unten geändert werden. Vorteilhaft ist es weiterhin, den gemessenen Temperaturwert in Abhängigkeit der Kerntemperatur und/oder des Lüfterlaufs zu kompensieren. Im Falle einer sehr hohen Kerntemperatur ist auch der Wärmestrahlungs- und Leitungsanteil zum Temperaturfühler umso stärker. Genauso kann die Lüfterlaufzeit oder die Lüfterdrehzahl zur Kompensierung der Temperatur genutzt werden.

Bei einem Temperaturfühler, der im Raum außerhalb des Gerätes angeordnet ist, wird eher eine zu hohe Raumtemperatur gemessen, insbesondere wenn der Temperaturfühler vom Warmluftstrom angeblasen wird.

Beim Heizgerät gemäß Anspruch 8 kann die Wärmeabgabe des Heizgerätes auch über die Stellung einer Öffnungsklappe oder die Leistung eines Heizkörpers äquivalent zur Änderung der Drehzahl des Lüfters geändert werden. Bei einem Wärmespeicherheizgerät wird die Wärmeabgabe über natürliche Konvektion über eine Öffnungsstellung der Öffnungsklappe beeinflußt. Ebenfalls kann die Wärmeabgabe durch das Einschalten eines Heizkörpers beeinflußt werden. Eine größere Öffnung der Öffnungsklappe bedeutet die Erhöhung der Wärmeabgabe des Speicherheizgerätes, und die Erhöhung der elektrischen Leistung des Heizkörpers führt ebenfalls zu einer stärkeren Wärmeabgabe.

Bei einem Lüfter hat es sich als vorteilhaft erwiesen, die Drehzahl über die Spannung des Lüfters, ein Puls-Pausen-Verhältnis einer Wechselspannung oder eine mittels Phasenanschnittsteuerung modifizierte Spannung vorzugeben. In gleicher Weise kann eine Heizleistung des Heizkörpers geregelt werden.

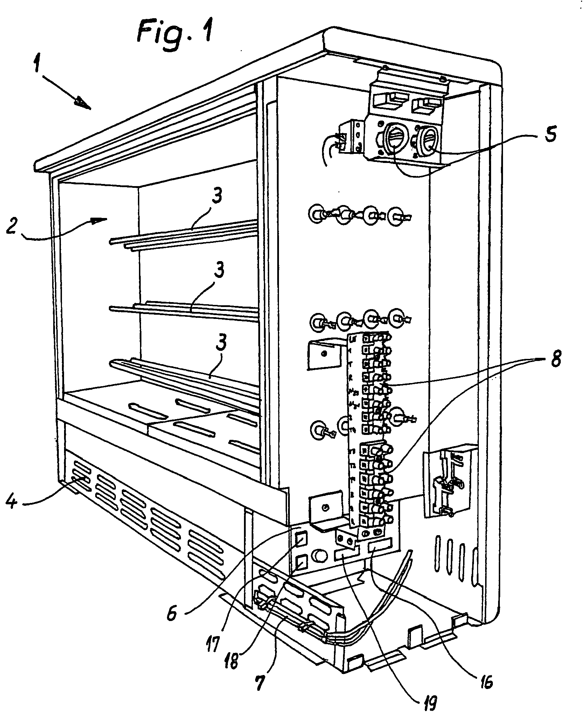

- Figur 1: zeigt ein Wärmespeicherheizgerät mit einem Raumtemperaturregler,

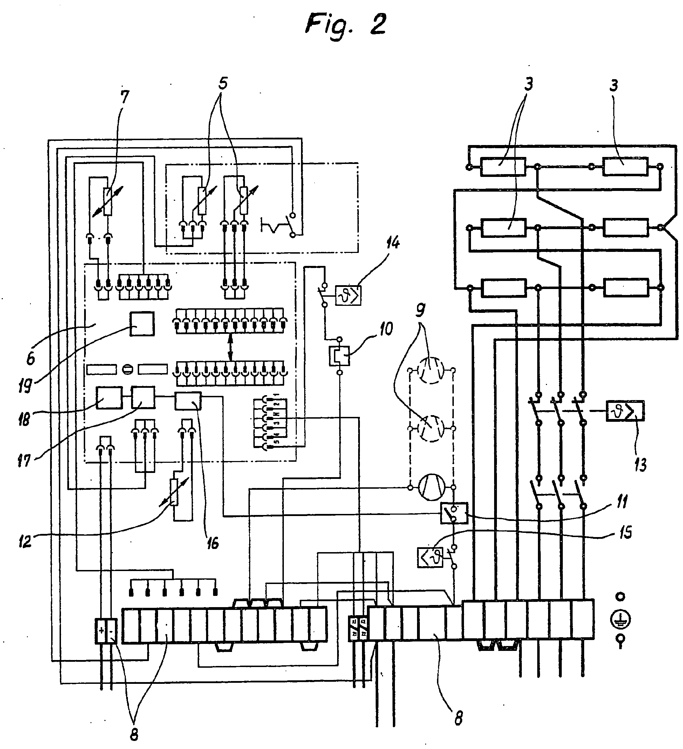

- Figur 2: einen Schaltplan eines Wärmespeicherheizgerätes mit Unterbrecher,
- Figur 3: den Signalverlauf zur Ansteuerung des Lüfters,
- Figur 4: den Signalverlauf mit festen Aktiv- und Ruhezeiten,
- Figur 5: den Signalverlauf mit variablen Aktiv- und Ruhezeiten,
- Figur 6: den Übergang von Signal-, Aktiv- und Ruhezeiten auf kontinuierliches Signal, und
- Figur 7: variable Aktiv- und Ruhezeiten und Übergang zu kontinuierlichem Betrieb.

In einem Wärmespeicherheizgerät 1 ist ein Kernraum 2 für die Aufnahme von nicht dargestellten Speichersteinen vorgesehen. Diese werden von Heizkörpern 3 - über eine Steuer- und Regeleinrichtung 6 gesteuert - erwärmt. Im unteren Bereich hinter einem Luftgitter 4 ist ein Lüfter 9 angeordnet, der Luft zur Wärmeabgabe durch die Speichersteine fördert.

Eine Anschlußklemme 8 ist für Netzanschluß und interne Verdrahtung vorgesehen. Die Heizkörper 3 werden über ein Thermorelais 10 an Netzspannung gelegt. Die Solltemperatur (Ts) eines Raumes ist an einem Sollwertsteller 5 einstellbar, der mit einer Steuer- und Regeleinrichtung 6 verbunden ist. An die Steuer- und Regeleinrichtung 6 ist ein Temperaturfühler 7 angeschlossen. Ein Schalter 11 ist in die Stromversorgung des Lüfters 9 zwischengeschaltet. Der Schalter 11 wird von der Steuer- und Regeleinrichtung 6 angesteuert. In einer einfachen Weise erfolgt dies durch einen Taktgenerator 16, der auch von einem Mikrocontroller 17 gesteuert sein kann. Der Mikrocontroller 17 verarbeitet die Parameter, die zur Steuerung und Regelung des Heizgerätes 1 erforderlich sind, wie die vom Temperaturfühler 7 und Fühler 12 gemessenen Temperaturen sowie die Einstellparameter, die durch die Sollwertsteller 5 vorgegeben sind. Im Schaltkreis befinden sich Sicherheitstemperaturbegrenzer 13, 14, 15.

Die vom Temperaturfühler 7 gemessene Temperatur (T) wird an eine Kompensationseinrichtung 18 weitergeleitet, in die auch das Signal des Fühlers 12 für die Kerntemperatur (Tk) eingeht. In der Kompensationseinrichtung 18 wird ein Temperatur-Istwert (Ti) generiert, der im Mikrocontroller 17 mindestens abhängig von der Solltemperatur (Ts) zur Berechnung einer Sollwärmeabgabe (Qs) benutzt wird. Abhängig von der Sollwärmeabgabe (Qs) wird der Lüfter 9 eingeschaltet und die Drehzahl vorgegeben. Aus der Sollwärmeabgabe (Qs) wird dazu z.B. in einer Triac-Baugruppe 19 das direkte Ansteuersignal (Xa) für den Lüfter 9 generiert.

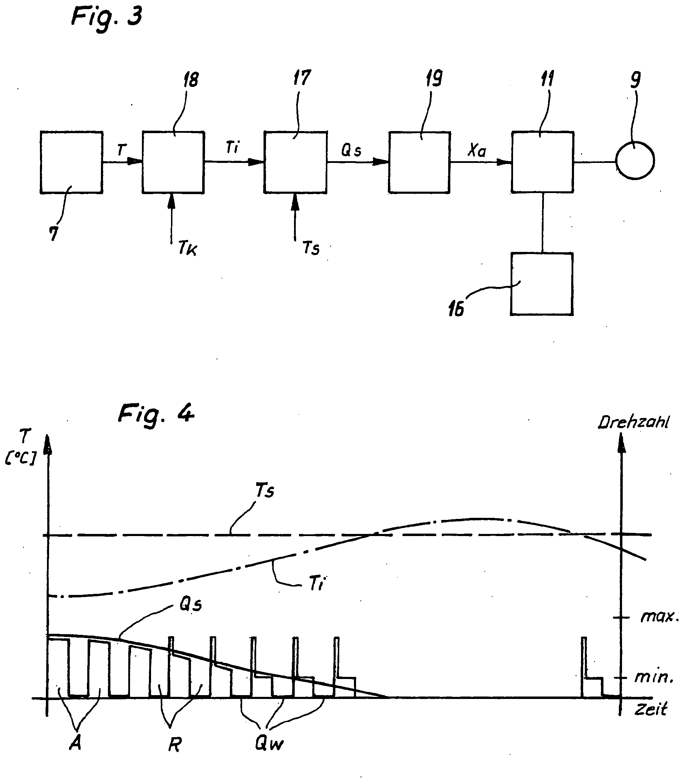

Die in den Figuren 4 bis 6 eingestellte Solltemperatur (Ts) beträgt 20 C°. Gemäß Fig. 4 verläuft die Sollwärmeabgabe (Qs) proportional zur Temperaturdifferenz zwischen (Ts) und (Ti). Abhängig von der Sollwärmeabgabe (Qs) wird der Lüfter 9 mit dem Ansteuersignal (Xa) angesteuert bzw. die Drehzahl gesteuert. Es ist vorteilhaft zu Beginn der Aktivzeiten (A) am Lüfter (9) mindestens bis zum Anlauf des Lüfters (9) eine Anlaufspannung oder Anlaufleistung anliegt und danach die Drehzahl des Lüfters (9) von der Steuer- oder Regeleinrichtung (6) vorgegeben ist damit der Lüfter sicher anläuft. Vorteilhaft ist eine Abweichung der Wärmeabgabe (Qw) in einer vorgegebenen oder einer von der Abweichung abhängigen Bandbreite von der Sollwärmeabgabe (Qs). Die Wärmeabgabe (Qw) kann während der Aktivzeit (A) und/oder Ruhezeit (R) auch abhängig von der Abweichung geändert werden.

Das Ansteuersignal (Xa) nimmt so lange ab, wie die Sollwärmeabgabe (Qs) abnimmt. Eingeschränkt ist die Drehzahl des Lüfters durch die Minimal- und Maximaldrehzahl. Der Lüfter 9 fördert nur in den Aktivzeiten (A) Luft durch das Gerät, wodurch nur in den Aktivzeiten (A) eine Wärmeabgabe durch erzwungene Konvektion erfolgt.

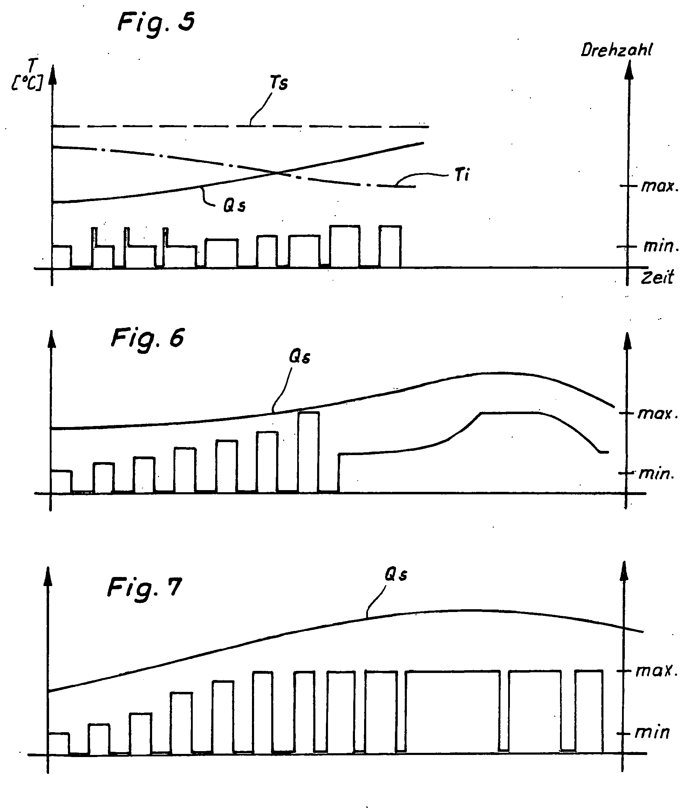

In Fig. 5 steigt der Sollwärmebedarf Qs an, wodurch zunächst die Ruhezeiten (R) bei minimaler Drehzahl des Lüfters 9 verkürzt werden. Im weiteren Verlauf bei steigendem Sollwärmebedarf (Qs) und wenn der Wärmebedarf bei minimaler Drehzahl nicht mehr gedeckt wird, wird die Drehzahl des Lüfters 9 angehoben und die Ruhezeit (R) wieder etwas vergrößert, bis der Sollwärmebedarf (Qs) weiter ansteigt und die Ruhezeiten (R) wieder verkürzt werden.

Fig. 6 zeigt ein Taktverhalten mit konstanten Aktivzeiten (A) und Ruhezeiten (R). Die Ruhezeiten (R) werden so lange vorgesehen, bis der Sollwärmebedarf (Qs) so groß wird, dass die Maximaldrehzahl des Lüfters erreicht ist. Dann, bei weiter steigendem (Qs), wird der Taktgenerator 16 deaktiviert und das System läuft kontinuierlich ohne Ruhezeiten (R).

Gemäß Fig. 7 wird zunächst mit konstanten Aktivzeiten (A) und Ruhezeiten (R) gearbeitet, und bei Erreichen der Maximaldrehzahl die Ruhezeiten (R) minimiert bis die Sollwärmeabgabe oder die Raumtemperatur erreicht ist.

## Patentansprüche

1. Verfahren mit der die Wärmeabgabe (Qw) eines Heizgeräts, (1) an einen Raum beeinflussbar ist, wobei ein Temperaturfühler, (7) mit einer Steuer- oder Regelvorrichtung (6) des Heizgerätes verbunden ist, in der eine Sollwärmeabgabe(Qs) berechnet wird, die mittels einer Solldrehzahl eines Lüfters, (9) einer Öffnungsstellung einer Öffnungsklappe und/oder mit der Sollheizleistung eines Heizkörpers (3) vom Heizgerät abgegeben wird,
**dadurch gekennzeichnet,**
**dass** die Sollwärmeabgabe zusätzlich von einem Taktsignal überlagert oder modifiziert ist, wodurch die Intensität der Wärmeabgabe von der Sollwärmeabgabe mindestens teilweise abweicht, wobei die von der Steuer- und Regeleinrichtung vorgegebenen Ein- und Ausschaltzeiten und auch die vorgegebenen Drehzahlwerte an den Lüfter vorzugsweise von Aktiv- und Ruhezeiten überlagert sind,
wobei eine Drehzahl des Lüfters (9), wenigstens in Ruhezeiten (R) von der Solldrehzahl, der berechneten Sollwärmeabgabe (Qs) abweicht, wobei in Aktivzeiten (A) die Wärmeabgabe (Qw) des Heizgerätes (1) durch Erhöhung der Drehzahl, erhöht ist und/oder dass in den Ruhezeiten (R) die Wärmeabgabe des Heizgerätes (1) durch Verminderung der Drehzahl, vermindert ist,
und zu Beginn der Aktivzeiten (A) am Lüfter (9) mindestens bis zum Anlauf des Lüfters (9) oder für eine vorgegebene Zeit die volle Netzspannung oder Bemessungsspannung des Lüfters (9) anliegt und nach Anlauf des Lüfters (9) oder nach einer vorgegebenen Zeit die Drehzahl des Lüfters (9) geregelt ist.

2. Verfahren zur Regelung einer Temperatur nach Anspruch 1, bei dem die Wärmeabgabe eines Heizgerätes an einen Raum abhängig von mindestens einer Solltemperatur gesteuert oder geregelt ist, wobei die Temperatur mit einem Temperaturfühler gemessen und einer Steuer- oder Regeleinrichtung zugeführt ist, und die Temperatur oder eine korrigierte Isttemperatur mit der Solltemperatur verglichen und abhängig von der Abweichung der Solltemperatur eine Sollwärmeabgabe bestimmt wird,
**dadurch gekennzeichnet,**
**dass** die Sollwärmeabgabe (Qs) in der Steuer- oder Regeleinrichtung (6) modifiziert wird oder mit einem Ansteuersignal (Xa) überlagert ist, wobei die Sollwärmeabgabe (Qs) in eine Wärmeabgabe (Qw) umgewandelt ist, die von der Sollwärmeabgabe (Qs) mindestens teilweise abweicht.

3. Verfahren nach einem oder mehreren der vorhergehenden Ansprüche 2 - 4,
**dadurch gekennzeichnet,**
**dass** das Zeit-Verhältnis der Aktivzeiten (A) zu den Ruhezeiten (R) konstant oder variabel ist.

4. Verfahren nach einem oder mehreren der vorhergehenden Ansprüche 2 - 5,
**dadurch gekennzeichnet,**
**dass** die Aktivzeiten (A) und Ruhezeiten (R) gleich groß sind.

5. Verfahren nach einem oder mehreren der vorhergehenden Ansprüche 2 - 6,
**dadurch gekennzeichnet,**
**dass** ein Steuer- oder regelbarer Anteil der Wärmeabgabe (Qw) ein- und ausgeschaltet und/oder erhöht und vermindert ist.

6. Verfahren nach einem oder mehreren der vorhergehenden Ansprüche 2 - 7,
**dadurch gekennzeichnet,**
**dass** die Wärmeabgabe (Qw) - über mehrere Aktivzeiten (A) und Ruhezeiten (R) gemittelt - der Sollwärmeabgabe (Qs) entspricht.

## Claims

1. Method by means of which the heat output (Qw) of a heating appliance (1) to a room can be influenced, wherein a temperature sensor (7) is connected to a control or adjusting device (6) of the heating appliance, in which a set heat output (Qs) is calculated, which is output by means of a set speed of a fan (9) of an opening position of an opening flap and/or by the set heating output of a heating element (3) of the heating appliance,
**characterised in that**
the set heat output is additionally overlaid or modified by a clock signal, whereby the intensity of the heat output differs at least partly from the set heat output, wherein the switch-on and switch-off times preset by the control or adjusting device and also the preset speed values on the fan are preferably overlaid by active and rest times,
wherein a speed of the fan (9) differs at least in rest times (R) from the set speed, the calculated set heat output (Qs), wherein in the active times (A) the heat output (Qw) of the heating appliance (1) is increased by increasing the speed and/or in the rest times (R) the heat output of the heating appliance (1) is decreased by reducing the speed,
and at the beginning of the active times (A) on the fan (9) at least up to the start-up of the fan (9) or for a predefined period the full mains voltage or rated voltage of the fan (9) is applied and after the start-up of the fan (9) or after a predefined period the speed of the fan (9) is adjusted.

2. Method for controlling a temperature according to claim 1, in which the heat output of a heating appliance to a room is controlled or adjusted as a function of at least one set temperature, wherein the temperature is measured by a temperature sensor and supplied to a control or adjusting device, and the temperature or a corrected actual temperature is compared with the set temperature and a set heat output is determined as a function of the variance from the set temperature,
**characterised in that**
the set heat output (Qs) is modified in the control or adjusting device (6) or is overlaid by a control signal (Xa), wherein the set heat output (Qs) is converted into a heat output (Qw) which differs at least partly from the set heat output (Qs).

3. Method according to claim 2,
**characterised in that**
the time ratio of active times (A) to rest times (R) is constant or variable.

4. Method according to one or more of the preceding claims 2 - 3,
**characterised in that**
the active times (A) and rest times (R) are of equal length.

5. Method according to one or more of the preceding claims 2 - 4,
**characterised in that**
its controllable or adjustable portion of the heat output (Qw) is switched on and off and/or is increased and decreased.

6. Method according to one or more of the preceding claims 2 - 5,
**characterised in that**
the heat output (Qw) - averaged over a number of active times (A) and rest times (R) - corresponds to the set heat output (Qs).

## Revendications

1. Procédé permettant d'influer sur le dégagement de chaleur (Qw) d'un appareil de chauffage (1) dans une pièce, dans lequel un capteur de température (7) est relié à un dispositif de commande ou de régulation (6) de l'appareil de chauffage, lequel dispositif calcule un dégagement de chaleur de consigne (Qs) qui est dégagé par l'appareil de chauffage au moyen du régime de consigne d'un ventilateur (9), de la position d'ouverture d'un volet d'ouverture et/ou avec la puissance calorifique de consigne d'un corps de chauffe (3),
**caractérisé en ce que**
un signal d'horloge se substitue en outre au dégagement de chaleur de consigne ou ce dernier est modifié, permettant à l'intensité du dégagement de chaleur de s'écarter au moins en partie du dégagement de chaleur de consigne, des temps d'activité et de repos se substituant de préférence aux moments d'activation et de désactivation prédéfinis par le dispositif de commande et de régulation ainsi qu'aux valeurs prédéfinies pour le régime du ventilateur,
un régime du ventilateur (9) s'écartant du dégagement de chaleur de consigne (Qs) calculé, au moins pendant les temps de repos (R) du régime de consigne ; le dégagement de chaleur (Qw) de l'appareil de chauffage (1) augmentant pendant les temps d'activité (A) du fait de l'augmentation du régime et/ou le dégagement de chaleur de l'appareil de chauffage (1) diminuant pendant les temps de repos (R) du fait de la diminution du régime,
et au début des temps d'activité (A), la pleine tension du réseau ou tension nominale du ventilateur (9) étant appliquée au ventilateur (9) au moins jusqu'au démarrage du ventilateur (9) ou pendant une durée prédéfinie, et le régime du ventilateur (9) étant régulé après le démarrage du ventilateur (9) ou après une durée prédéfinie.

2. Procédé de régulation de température selon la revendication 1, dans lequel le dégagement de chaleur d'un appareil de chauffage dans une pièce est commandé ou régulé en fonction d'au moins une température de consigne, la température à réguler étant mesurée avec un capteur de température et fournie à un dispositif de commande ou de régulation, et ladite température ou une température réelle corrigée est comparée à la température de consigne et il est déterminé un dégagement de chaleur de consigne en fonction de l'écart avec la température de consigne,
**caractérisé en ce que**
le dégagement de chaleur de consigne (Qs) est modifié dans le dispositif de commande ou de régulation (6) ou un signal de commande (Xa) s'y substitue, le dégagement de chaleur de consigne (Qs) étant converti en un dégagement de chaleur (Qw) qui s'écarte au moins en partie du dégagement de chaleur de consigne (Qs).

3. Procédé selon la revendication 2,
**caractérisé en ce que**
le rapport temporel des temps d'activité (A) aux temps de repos (R) est constant ou variable.

4. Procédé selon une ou plusieurs des revendications précédentes 2 et 3,
**caractérisé en ce que**
les temps d'activité (A) et les temps de repos (R) sont égaux.

5. Procédé selon une ou plusieurs des revendications précédentes 2 à 4,
**caractérisé en ce que**
la partie susceptible d'être commandée ou régulée du dégagement de chaleur (Qw) est activée et désactivée et/ou augmentée et réduite.

6. Procédé selon une ou plusieurs des revendications précédentes 2 à 5,
**caractérisé en ce que**
la moyenne du dégagement de chaleur (Qw) sur plusieurs temps d'activité (A) et temps de repos (R) correspond au dégagement de chaleur de consigne (Qs).
